# EUROPEAN PATENT APPLICATION

(11) **EP 1 158 017 A2**
(43) Date of publication of application: **28.11.2001**
(21) Application number: 01304549.7
(22) Date of filing: 23.05.2001
(51) Int. Cl.: C08J 7/04, C09D 133/14, C08L 101/00

(54) **Coated molding of thermoplastic resin composition and production method therefor**

(30) Priority: 23.05.2000 JP 2000151339
(71) Applicant: DAICEL CHEMICAL INDUSTRIES, Ltd., Sakai-shi, Osaka 590-0905 (JP)
(72) Inventor: Yabui, Akihiro, Ohtake-shi, Hiroshima 739-0651 (JP); Ohtsuka, Yoshihiro, Ohtake-shi, Hiroshima 739-0651 (JP)
(74) Representative: Benson, John Everett

(57) **Abstract**

A coated molding comprising a molding of a thermoplastic resin composition including a thermoplastic resin and a compound having a functional group, and a coating layer formed on a surface of the molding, the thermoplastic resin composition including a thermoplastic resin and an epoxidized diene based block copolymer obtained by epoxidizing a block copolymer consisting of a polymer block mainly including a vinyl aromatic hydrocarbon compound and a polymer block mainly including a conjugate diene compound, or a partially hydrogenated matter of the block copolymer, and thus obtained coating layer is firmly adhered to the molding of the thermoplastic resin composition.

## Description

### BACKGROUND OF THE INVENTION

### 1. Field of the Invention

The present invention relates to a coated molding comprising a thermoplastic resin composition molding with excellent coating properties including a thermoplastic resin and a compound having a functional group, and a coating layer on the surface of the thermoplastic resin composition molding, and to a production method therefor. The coated molding is suitable for industrial materials such as automobile parts, household electric appliance parts, electrical equipment parts, and other commodities.

### 2. Description of the Related Art

Thermoplastic resins such as a polypropylene resin are light-weight, and have excellent stiffness, hardness, and heat resistance. Also, they are inexpensive and can be easily molded into a desired shape with various molding methods such as injection molding, calender molding, and extrusion molding. Accordingly, they have been widely used for automotive interiors including instrument panels, trims, and pillars, automotive exteriors including fenders, bumpers, side molding, mud guards, and mirror covers, other automobile parts, household electric appliance parts, industrial parts, and other commodities. However, a polyolefin based resin generally has problems with coating properties, coating film adhesive properties, and adhesive properties with a coating agent, which are required to be improved.

Typically, a polyolefin based resin such as a polypropylene resin are coated after a surface treatment.

The surface treatment prior to coating is for degreasing or polarizing the surface of a non-polar polyolefin based resin molding. Specifically, the non-polar polyolefin based resin is surface-treated with a halogenated hydrocarbon such as trichloroethane, is oxidized or polarized with a corona discharge, a plasma jet and the like, and is then coated.

Another means for providing the coating properties is to add a very low molecular weight ethylene propylene rubber (EPR) to the non-polar polyolefin based resin composition. Japanese Unexamined Patent Application Publication Hei.6-157838 proposes that modified polyolefin with a compound having a polar group is added to the non-polar polyolefin based resin composition. Japanese Unexamined Patent Application Publication Hei.5-39383 proposes that a modified polyolefin with a compound having an unsaturated hydroxyl group is added to a non-polar polyolefin based resin composition. Japanese Unexamined Patent Application Publication Hei.3-157168 proposes that an oligomer having a polar end group is added to a non-polar polyolefin based resin composition.

However, in these methods, a large amount of very low molecular weight EPR or chemically modified compounds are required to provide sufficient coating properties.

An object of the present invention is to provide a coated molding where a firmly adhered coating layer is formed on the surface of a thermoplastic resin composition molding without performing a complex surface treatment.

### SUMMARY OF THE INVENTION

Through intense studies by the present inventors to solve the above-mentioned problems, it was discovered that on a molding of a thermoplastic resin composition obtained by adding a compound having a functional group such as an epoxidized diene based block copolymer to a thermoplastic resin such as a polypropylene based resin, a coating layer can be formed with an ultraviolet curable urethane acrylate coating agent, and firmly adhered to the molding without a special surface treatment such as a corona discharge treatment. Thus, the present invention has been achieved.

According to the first aspect of the present invention, a coated molding comprising a molding (M) of a thermoplastic resin composition (A) including a thermoplastic resin (a1) and a compound (a2) having a functional group, and a coating layer (B) formed on the surface of the molding (M) is provided.

According to the second aspect of the present invention, the compound (a2) has an epoxy group.

According to the third aspect of the present invention, the compound (a2) having the epoxy group is an epoxidized diene based block copolymer obtained by epoxidizing a block copolymer consisting of a polymer block mainly including a vinyl aromatic hydrocarbon compound, and a polymer block mainly including a conjugate diene compound, or a partially hydrogenated matter of the block copolymer.

According to the fourth aspect of the present invention, the coating layer (B) is formed by an ultraviolet curable urethane acrylate based coating agent.

According to the fifth aspect of the present invention, the thermoplastic resin composition (A) comprises 85% to 97% by weight of the thermoplastic resin (a1) and 15% to 3% by weight of the compound (a2) having the functional group.

According to the sixth aspect of the present invention, the thermoplastic resin (a1) is a polyolefin based resin.

According to the seventh aspect of the present invention, the polyolefin based resin is a polypropylene based resin and/or a polyethylene based resin.

According to the eighth aspect of the present invention, a method for producing the above-mentioned coated molding comprises the steps of coating a surface of the molding (M) with the coating agent (b), and reacting the compound (a2) with the coating agent (b) to form the coating layer (B) thereon.

According to the ninth aspect of the present invention, the coating agent (b) is coated after the surface of the molding is treated with a hydrophobic solvent.

According to the tenth aspect of the present invention, the hydrophobic solvent is one or more selected from the group consisting of xylene, cyclohexane, and toluene.

### DESCRIPTION OF THE PREFERRED EMBODIMENTS

The present invention will be described below with more detail.

### Thermoplastic resin (a1)

A percentage of the thermoplastic resin (a1) for use in the present invention is 85% to 97% by weight, preferably 85% to 95% by weight based on the total weight of the thermoplastic resin composition (A).

Any known thermoplastic resin can be used as the thermoplastic resin (a1) for use in the present invention. Examples of the preferred thermoplastic resin include, but are not limited to, general-purpose thermoplastic resins such as an ABS resin, an impact resistant polystyrene resin, a polycarbonate resin, a polymethylmethacrylate resin, a polyolefin based resin, a saturated polyester resin, a polyamide resin, a polyvinyl chloride resin, a polyacetal resin, and a polyphenylene oxide based resin; engineering plastics; and a mixture thereof. More preferred is the polyolefin based resin such as polypropylene and polyethylene. The production method for these thermoplastic resins is not especially limited.

The polyolefin based resin may be a homopolymer of an α-olefine based monomer, or a copolymer of two or more of the α-olefine based monomers. Specific examples include a polyethylene based polymer such as a very low density-, low density-, medium density-, and high density-polyethylene, a polypropylene based copolymer, polybutene-1, and poly4-methylpentene. The polypropylene based resin has high modifying properties, and therefore is preferred.

The polypropylene based resin may be crystalline or amorphous, preferably crystalline, and may be a propylene homopolymer or a copolymer of propylene and another α-olefine. The copolymer may be a block copolymer or a random copolymer. Preferred is the propylene homopolymer and/or the propylene block copolymer. Most preferred is a propylene/ethylene block copolymer.

The propylene/ethylene block copolymer contains 0.5 to 8 mol%, preferably 1 to 7 mol% of an ethylene derived unit. The content of the ethylene in the propylene block copolymer is simply referred to as the ethylene content.

The ethylene content can be determined using ¹³C-NMR with a normal procedure. Crystallinity of such crystalline polypropylene measured by an X-ray diffraction method is generally 56% or more, preferably 60% or more, more preferably 65% to 95%. The crystal may have an isotactic, or syndiotactic structure.

### Compound (a2) having the functional group

A percentage of the compound (a2) having the functional group for use in the present invention is 3% to 15% by weight, preferably 5% to 15% by weight based on the total weight of the thermoplastic resin composition (A). When the percentage is less than the above range, an improved adhesion of the coating layer to the molding is insufficient, and when the percentage is more than the above range, appearance of the molding is not good.

As the compound (a2) having the functional group, any compound having the functional group capable of reacting with the coating agent can be used with no limitation. Specific examples of the functional group include an epoxy group, an acid anhydride group, an isocyanate group, an amino group, a hydroxyl group, a melamine group, a cyclic lactone group, and carboxylic group. Preferred compound (a2) has an epoxy group. Specific examples of a compound having an epoxy group include an epoxidized diene based block copolymer, a glycidylester type epoxy compound, a glycidylamine type epoxy compound, a cyclic aliphatic epoxy compound, and a heterocyclic epoxy compound. Preferred is the epoxidized diene based block copolymer.

### Epoxidized diene based block copolymer.

The epoxidized diene based block copolymer for use in the present invention is preferably obtainable by epoxidizing a diene based block copolymer or a partially hydrogenated matter of the diene based block copolymer.

The diene based block copolymer herein described is the block copolymer comprising a vinyl aromatic block and a conjugated diene block. Preferably the "vinyl aromatic block" consists mainly, especially substantially entirely, particularly at least 60 or 75 mole %, of vinyl aromatic compound. Preferably the "conjugated diene" block consists mainly, especially substantially entirely, particularly at least 60 or 75 mol% of conjugated diene compound. The weight ratio of the vinyl aromatic compound and the conjugated diene compound, i.e. the weight ratio of those polymer blocks, is preferably 25/75 to 95/5, more preferably 25/75 to 80/20. The number average molecular weight of the block copolymer for use in the present invention is within the range of 5,000 to 1,000,000 preferably 10,000 to 800,000. The molecular weight distribution, i.e., the ratio Mw/Mn, where Mw represents a weight average molecular weight and Mn represents a number average molecular weight, is 10 or less. The block copolymer may be a straight chain type, branched chain type, radial type, or any combination thereof. For example, the block copolymer comprising the vinyl aromatic compound (X) and the block-conjugate diene compound (Y) has a structure of X-Y-X, Y-X-Y-X, (X-Y-)₄Si, X-Y-X-Y-X, and the like. An unsaturated bond of the conjugate diene compound in the diene based block copolymer may be partially hydrogenated.

The vinyl aromatic compound constituting the diene based block copolymer is one or two or more selected from, for example, styrene, α-methylstyrene, vinyltoluene, p-tert-butylstyrene, divinylbenzene, p-methylstyrene, 1,1-diphenylstyrene and the like. Preferred is styrene. The conjugate diene compound is one or two or more selected from, for example, butadiene, isoprene, 1,3-pentadiene, 2,3-dimethyl-1,3-butadiene, piperylene, 3-butyl-1,3-octadiene, phenyl-1,3-butadiene and the like. Preferred are butadiene, isoprene, and a combination thereof.

Any production method can be used as long as the block copolymer has the aforementioned structure. For example, the vinyl aromatic compound-conjugate diene compound block copolymer can be produced in an inert solvent using a lithium catalyst, as described in Japanese Examined Patent Application Publication No. 40-23798, and Japanese Unexamined Patent Application Publication No. 51-33184. The partially hydrogenated block copolymer for use in the present invention can be produced by hydrogenating in an inert solvent in the presence of a hydrogenation catalyst as described in Japanese Examined Patent Application Publication Nos. 42-8704 and 43-6636, and Japanese Unexamined Patent Application Publication No. 59-133203.

The epoxidized diene based block copolymer for use in the present invention can be obtained by reacting the above-mentioned block copolymer with an epoxidation agent such as hydroperoxides and peracids in an inert solvent. Examples of the peracids include performic acid, peracetic acid, and perbenzoic acid. When hydroperoxide is used, a combination of a mixture of tungstic acid and sodium hydroxide, and hydrogen peroxide; a combination of an organic acid and hydrogen peroxide; or a combination of molybdenum hexacarbonyl and tert-butyl hydroperoxide can have a catalytic effect.

The amount of the epoxidation agent is not especially limited, and the optimal amount for each case depends on the individual epoxidation agent, a desired epoxidation degree, and variable factors of an individual block copolymer.

The resultant epoxidized diene based block copolymer can be isolated by any suitable method. For example, the epoxidized block copolymer may be precipitated in an inactive solvent; the block copolymer may be put into hot water under agitation to distil and remove the solvent; or the solvent may be directly removed from the block copolymer.

The content of the epoxy group in the epoxidized diene based block copolymer for use in the present invention can be expressed by the oxirane oxygen content. The oxirane oxygen content is 0.2% to 6% by weight, preferably 0.6% to 4.5% by weight. If the oxirane oxygen content exceeds 6% by weight, undesired gelation may be induced during processing the epoxidized diene based block copolymer, resulting in a defective appearance. On the other hand, if the oxirane oxygen content is less than 0.2% by weight, adhesiveness between the thermoplastic resin composition (A) and the coating layer may be lowered.

### Thermoplastic resin composition (A)

The thermoplastic resin composition (A) for use in the present invention comprises the thermoplastic resin (a1) and the compound (a2) having the functional group, and specifically 85% to 97% by weight of the thermoplastic resin (a1) and 15% to 3% by weight of the compound (a2) having the functional group.

The thermoplastic resin composition for use in the present invention may contain other thermoplastic elastomers, various inorganic fillers, various additives as required, as long as the advantages of the present invention are fully provided.

Examples of the thermoplastic elastomers include diene based rubber such as polybutadiene, styrene-butadiene copolymer, polyacrylonitrile-butadien copolymer and polyisoprene, non-diene based rubber such as ethylene-α-olefine copolymer and ethylene-α-olefine-polyene copolymer, styrene-butadiene block copolymer, hydrogenated styrene-butadiene block copolymer, ethylene-propylene elastomer, stylene graft ethylene-propylene elastomer, ethylene based ionomer resin, styrene-isoprene block copolymer, and hydrogenated styrene-isoprene block copolymer. These thermoplastic elastomers can be used alone or in combination.

The thermoplastic elastomer is added in an amount of 0% to 100% by weight, preferably 1% to 50% by weight based on 100% by weight of the sum of the thermoplastic resin (a1) and the compound (a2) having the functional group with mechanical properties and heat resistance taken into consideration. If the amount of the thermoplastic elastomer exceeds 100% by weight, heat resistance tends to be decreased. Within the specified range, moldability does not decrease.

Examples of the inorganic filler include natural silica, silicic acid or silicate such as fine powder talc, kaolinite, fired clay, pyrophyllite, sericite, and wollastonite; carbonates such as precipitated calcium carbonate, heavy calcium carbonate, and magnesium carbonate; hydroxides such as aluminum hydroxide and magnesium hydroxide; oxides such as zinc oxide, zinc white, and magnesium oxide; powder fillers including synthetic silica, silicic acid or silicate such as calcium silicate hydrate, aluminum silicate hydrate and silicate hydrate; flake fillers such as mica; fiber fillers such as basic magnesium sulfate whisker, calcium titanate whisker, aluminum borate whisker, sepiolite, PMF (Processed Mineral Fiber), xonotlite, potassium titanate, ellestadite; balloon fillers such as glass balloon, and fly ash balloon; or mixtures thereof, Preferred is talc.

The amount of the inorganic filler is preferably 50% by weight or less based on 100% by weight of the sum of the thermoplastic resin (a1) and the compound (a2) having the functional group. If the amount of the inorganic filler exceeds this range, adverse effects such as poor flowability, flow marks generated on the surface of the molding, and decrease of the coating adhesiveness, which is characteristic in the present invention, occur.

The inorganic filler, especially talc, may or may not be surface-treated in advance. There are chemical or physical treatments using treating agents such as a silane coupling agent, a higher fatty acid, a metallic salt of fatty acid, an unsaturated organic acid, an organic titanate, a resin acid, and polyethyleneglycol.

According to the present invention, organic fillers such as lignin and reclaimed rubber can be used together with the inorganic fillers.

Examples of the additives include antioxidants such as a phenol based antioxidant, sulfur based antioxidant, and phosphorus based antioxidant; hydrochloric acid absorber; heat resisting stabilizers; light stabilizers; lubricants; nucleating agents such as aromatic aluminum carboxylate, aromatic phosphate, and dibenzylidene sorbitol; ultraviolet ray absorbers; antistatic agents; flame retardants; pigments, dyes; dispersants; copper inhibitors; foaming agents; and plasticizers.

The thermoplastic resin composition (A) for use in the present invention can be obtained by melt-kneading the aforementioned components using a known method.

The aforementioned components are simultaneously or successively introduced and kneaded into/in, for example, a Henschel mixer, a V type blender, a tumbler blender, or a ribbon blender, and then melt-kneaded in a single screw extruder, a multi screw extruder, a kneader, or a Banbury mixer.

Among them, the multi screw extruder, the kneader, and the Banbury mixer having excellent mixing properties can provide a high quality thermoplastic resin composition in which respective components are more uniformly dispersed, and therefore are preferred.

According to the present invention, respective components may be simultaneously mixed and kneaded to prepare the composition. Alternatively, a premixture, i.e., master batch, containing a high degree of a specific component, for example, an inorganic filler, is prepared, and then is diluted with the components (a1) and (a2) so that a desired degree of inorganic filler is contained.

### Molding (M) of thermoplastic resin composition (A)

The thermoplastic resin composition (A) can be molded into any shape using not only known molding methods, but also other molding methods. Preferred is an injection molding.

When the molding is made of a polyolefin based resin, the molding is wiped with a hydrophobic solvent before coating to improve adhesiveness between the molding and the coating layer. As the solvent for wiping, hydrophobic solvents such as cyclohexane, xylene, toluene, and benzene; esters such as dioctyladipate; polar solvents such as tetrahydrofuran, dimethylformamide, dimethylsulfoxide; oils such as paraffin; and the like can be used. The hydrophobic solvent such as xylene is especially preferred.

On the surface of the molding (M), low molecular weight oxidized components contained in the resin, additives such as a plasticizer, an age resistor, a surfactant, an antistatic agent, a lubricant, and a mold release agent tend to be flocculated. For this reason, the molding (M) has a lower adhesive strength on the surface than that of the inside of the molding. The wiping before coating is to remove such weak surface layers, and to form a new layer containing a compound having a functional group, such as the epoxidized diene based block copolymer, whereby adhesiveness between the molding and the coating agent is improved.

### Coating layer (B)

Any known coatings such as an acrylic resin, and a urethane resin can be applied as the coating agent (b) for forming the coating layer (B). The coating agent (b) is selected depending on the compound (a2) having the functional group reacting with the coating agent. When the compound (a2) has an epoxy group, especially, an epoxidized diene based block copolymer, photo-curing such as an ultraviolet curing urethane acrylate based resin coating is preferable.

The coating agent (b) can be coated using, for example, a dipping method, a flow coat method, or a spraying method. The coating layer (B) generally has a thickness of 1 to 30 µm, preferably 2 to 20 µm for good smoothness.

The molding (M) is coated with the coating layer (B) to provide a coated molding having excellent adhesiveness between the molding (M) and the coating layer (B). This is because the functional group of the compound (a2) reacts with the coating agent to improve the adhesiveness between the molding and the coating layer.

In order to promote the reaction between the coating agent and the compound (a2), they may be heated under appropriate conditions, e.g., temperature, and time.

Other features of this invention will become apparent in the course of the following description of exemplary embodiments, which are given for illustration of the invention and are not intended to be limiting thereof.

The components used in the following Examples and Comparative Examples are as follows.

### (1) Thermoplastic resin (a1):

a1-1 ... Homopropylene "H501" having a melt flow rate (MFR) of 3g/10 minutes made by Sumitomo Chemical Co., Ltd.;
a1-2 ... Polypropylene block copolymer "J708" having a MFR of 45g/10 minutes made by Grand Polymer Inc., Co., Ltd.; and
a1-3 ... Polyethylene "Petrocene 203" having a MFR of 15g/10 minutes made by TOSOH CORPORATION.

### (2) Compound (a2) having a functional group:

### (Preparation Example 1)

Preparation of a2-1: 300 g of styrene - butadiene - styrene block copolymer ("TR-2000" made by JSR Corporation; a weight ratio of styrene to butadiene is 40/60) and 1,500 g of ethyl acetate were introduced into a reactor having a jacket equipped with an agitator, a reflux condenser, and a thermometer, and dissolved therein. 165 g of ethyl acetate solution containing 30% by weight of peracetic acid was continuously added dropwise to epoxidize the mixture at 40°C for 3 hours with agitation. The reaction liquid was taken out at room temperature, and a large amount of methanol was added thereto to precipitate the polymer, which was filtered, washed with water, and dried. Thus, the epoxidized diene based block copolymer (a2-1) having 3.0% by weight of oxirane oxygen content was obtained.

### (Preparation Example 2)

Preparation of a2-2: 600 g of styrene - butadiene - styrene block copolymer ("Asaflex 810" made by Asahi Chemical Industry Co., Ltd.; a weight ratio of styrene to butadiene is 70/30) and 1,800 g of ethyl acetate were introduced into a reactor having a jacket equipped with an agitator, a reflux condenser, and a thermometer, and dissolved therein. 150 g of ethyl acetate solution containing 30% by weight of peracetic acid was continuously added dropwise to epoxidize the mixture at 40°C for 3 hours with agitation. The reaction liquid was taken out at room temperature, and a large amount of methanol was added thereto to precipitate the polymer, which was filtered, washed with water, and dried. Thus, the epoxidized diene based block copolymer (a2-2) having 2.0% by weight of oxirane oxygen content was obtained.

### (3) Other thermoplastic elastomer:

D1: Styrene butadiene block copolymer "TR-2000" made by JSR Corporation;
D2: Hydrogenated styrene butadiene block copolymer "Clayton G1657" made by Shell Chemical, Co., Ltd.

### (4) Inorganic filler: Talc "Micelletone" having an average particle size of 1.4 µm made by Hayashi Kasei Co., Ltd.

### Examples 1 to 11

The above-described components in a ratio listed in Table 1 were mixed in a Henschel mixer, and then kneaded in a twin screw extruder at 230°C to provide respective thermoplastic resin compositions. Each of the thermoplastic resin compositions was molded using an injection molding machine at a cylinder temperature of 230°C, and at a die temperature of 40°C into a test piece having a size of 80 mm x 15 mm x 2 mm for a coating adhesiveness test. Some test pieces were wiped with a cyclohexane solvent, and then tested for adhesiveness of the coating layer described below. The rest of the test pieces were not wiped, and tested similarly. Table 1 shows the results.

### Comparative Examples 1 to 6

The above-described components in a ratio listed in Table 2 were mixed in a Henschel mixer, and then kneaded in a twin screw extruder at 230°C to provide respective thermoplastic resin compositions. Each of the thermoplastic resin compositions was molded using an injection molding machine at a cylinder temperature of 230°C, and at a die temperature of 40°C into a test piece having a size of 80 mm x 15 mm x 2 mm for a coating adhesiveness test. Respective test pieces were wiped with a cyclohexane solvent, and then tested for adhesiveness of the coating layer described below. Table 2 shows the results.

### Evaluation of various properties

(1) Coating property (adhesiveness): Each test piece was coated with a urethane acrylate based coating agent "Diabeam UL1192/UK5225" made by Mitsubishi Rayon Co., Ltd. in a dry coating thickness of 10 to 20 µm, dried at 60°C for 15 minutes, and then cured by irradiating with an ultraviolet ray. After allowing to stand for 48 hours at 25°C, adhesiveness between the coating layer and the molding was evaluated using a cross-cut adhesion test by the Japanese Industrial Standard (JIS). The results are also shown in Tables 1 and 2 by "A", "B", "C". "A" means that the coating layer was never peeled. "B" means that the coating layer was partly peeled. "C" means that the coating layer was completely peeled.
(2) Coating property (hot water resistance): After each test piece was immersed in hot water at 50°C for 24 hours, adhesiveness between the coating layer and the molding was evaluated using the above-mentioned cross-cut adhesion test by JIS. The results are shown in Tables 1 and 2 by "A", "B", "C" as defined above.
(3) Appearance: Each test piece was visually inspected for a flow mark. A flow mark is a stripe mark generated vertically on an injection pass. The results are shown in Tables 1 and 2 by "A" and "C". "A" means that no flow mark was generated. "C" means that a flow mark or flow marks were generated.

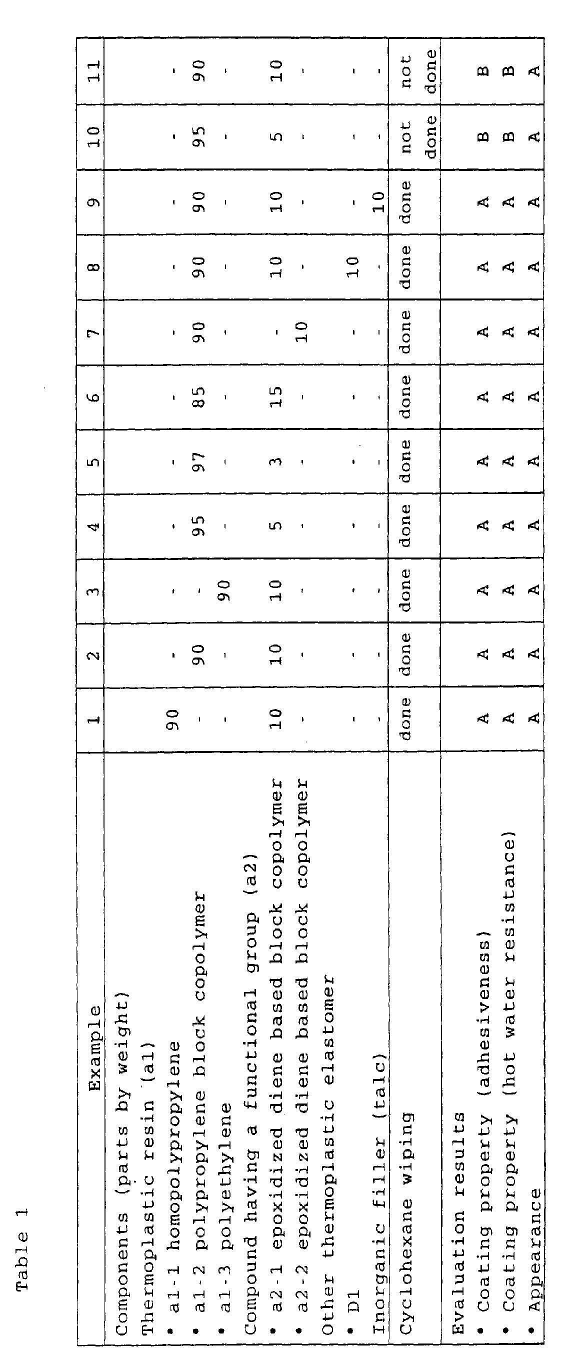

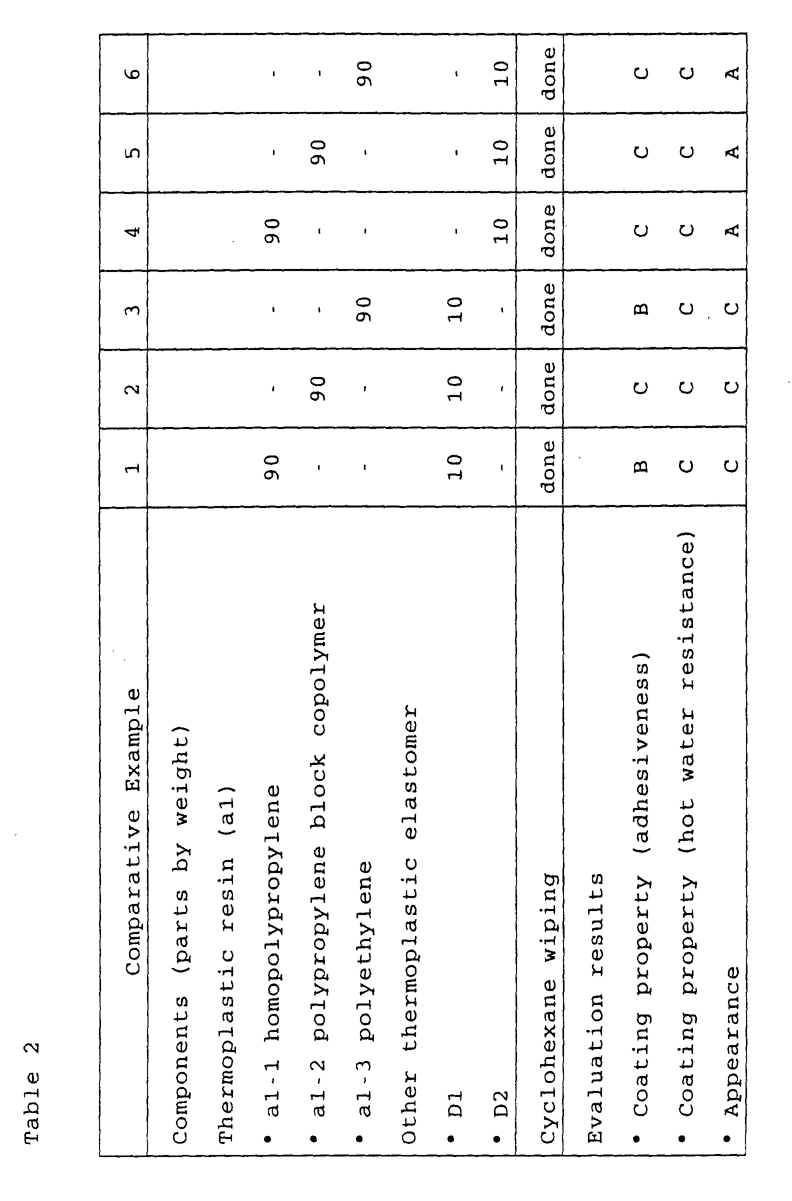

According to the present invention, such a coated molding where a firmly adhered coating layer is formed on the surface of a thermoplastic resin composition molding is provided without requiring any complex surface treatments. The coated molding of the present invention is suitable for industrial materials including automobile parts, household electric appliance parts, and electrical equipment parts, and other commodities.

## Claims

1. A coated molding comprising:
a molding (M) of a thermoplastic resin composition (A) comprising a thermoplastic resin (a1) and a compound (a2) having a functional group, and
a coating layer (B) on a surface of the molding (M).

2. A coated molding according to claim 1, wherein the compound (a2) has an epoxy group.

3. A coated molding according to claim 2, wherein the compound (a2) having the epoxy group is an epoxidized diene based block copolymer obtainable by epoxidizing a block copolymer comprising vinyl aromatic hydrocarbon block and a conjugate diene block, or a partially hydrogenated matter of the block copolymer.

4. A coated molding according to any one of claims 1 to 3, wherein the coating layer (B) comprises a cured urethane acrylate based coating agent.

5. A coated molding according to any one of claims 1 to 4, wherein the thermoplastic resin composition (A) comprises 85% to 97% by weight of the thermoplastic resin (a1) and 15% to 3% by weight of the compound (a2) having the functional group.

6. A coated molding according to any one of claims 1 to 5, wherein the thermoplastic resin (a1) comprises a polypropylene based resin and/or a polyethylene based resin and/or other polyolefin based resin.

7. A method for producing a coated molding comprising the steps of coating a surface of the molding (M) according to any one of claims 1 to 6 with a coating agent (b), and reacting the compound (a2) with the coating agent (b) to form the coating layer (B) thereon.

8. A method for producing a coated molding according to any one of claims 1 to 6 in which an ultraviolet curable urethane acrylate based coating agent is cured to form coating layer (B), which method is optionally a method according to claim 7.

9. A method for producing a coated molding according to claim 7 or 8, wherein the coating agent (b) is coated after the surface of the molding has been treated with a hydrophobic solvent.

10. A method for producing a coated molding according to claim 9, wherein the hydrophobic solvent comprises one or more of xylene, cyclohexane and toluene.
